# EUROPEAN PATENT SPECIFICATION

(11) **EP 2 399 870 B1**
(45) Date of publication and mention of the grant of the patent: **11.03.2015**
(21) Application number: 10186497.3
(22) Date of filing: 05.10.2010
(51) Int. Cl.: C02F 1/32

(54) **Ultraviolet sterilization filter**
UV-Sterilisierungsfilter
Filtre de stérilisation par ultrasons

(30) Priority: 24.06.2010 KR 20100059891; 15.09.2010 KR 20100090581
(43) Date of publication of application: 28.12.2011
(73) Proprietor: Woongjin Coway Co., Ltd., Choongcheongnam-do 314-895 (KR)
(72) Inventor: Lee, Eung Sam, 151-851, SEOUL (KR); Noh, Jin Hwan, 151-851, SEOUL (KR); Park, Kwon II, 151-851, SEOUL (KR); Park, Si Jun, 151-851, SEOUL (KR)
(74) Representative: Larcher, Dominique

(56) References cited:
- US-A1- 2002 103 409
- US-A1- 2004 004 044
- US-A1- 2008 315 117
- US-A1- 2009 155 136

## Description

### CROSS-REFERENCE TO RELATED APPLICATIONS

This application claims the priority of Korean Patent Application No. 10-2010-0059891 filed on June 24, 2010 and Korean Patent Application No. 10-2010-0090581 filed on September 15, 2010, in the Korean Intellectual Property Office, the disclosure of which is incorporated herein by reference.

### BACKGROUND OF THE INVENTION

### Field of the Invention

The present invention relates to an ultraviolet sterilization filter which can be easily fabricated, is made of a synthetic resin to reduce a fabrication cost, and has improved sterilizing power.

### Description of the Related Art

An ultraviolet sterilization filter is a device which includes an ultraviolet lamp, an ultraviolet light emitting diode (LED), or the like, for sterilizing introduced water with ultraviolet rays. The ultraviolet sterilization filter is provided in a water purifier or the like to sterilize water which has been filtered by a water purification filter.

In order to increase the sterilizing power of ultraviolet rays, the related art ultraviolet sterilization filter is made of a metal allowing ultraviolet rays radiated from an ultraviolet lamp or an ultraviolet LED to be reflected therefrom. However, the fabrication of a metallic ultraviolet sterilization filter is not easy and incurs high fabrication costs.

In addition, an ultraviolet sterilization filter is fabricated such that a filter main body is made of a synthetic resin, a reflection member formed as a plate for reflecting ultraviolet rays is processed to have a cylindrical shape so as to be inserted into the filter main body through welding or the like, and then inserted into the filter main body. However, the ultraviolet sterilization filter thusly fabricated has a problem in that water may be introduced into a space between the filter main body made of a synthetic resin and the reflection member, leading to the possibility that water may be discharged without being sterilized by ultraviolet rays. In addition, the shape of the filter main body is so complicated that when a plurality of reflection members are inserted into the filter body, ultraviolet rays may infiltrate into gaps between the reflection members, lowering the sterilizing power of the ultraviolet sterilization filter.

An example of an ultraviolet sterilization filter is disclosed in US 2008/315117. This ultraviolet sterilization filter comprises a UV-transparent cover tube, a radiation source and a reactor housing mounted on the outside, with the result that a helical cannel is formed. Also, the inside of the reactor housing can have a radiation-reflective design, and this can be due to the use of reflective metallic or polymer materials or reflective coatings made of an appropriate material.

A further example of an ultraviolet sterilization filter is disclosed in US 2002/103409. This ultraviolet sterilization filter includes a rod-shaped light source covered by a glass protective tube. Moreover, the ultraviolet sterilization filter is made of glass or an optically transparent plastic, and a reflective film is preferably formed on the outer surface of the ultraviolet sterilization filter.

An additional example of an ultraviolet sterilization filter is disclosed in US 2004/004044.

This ultraviolet sterilization filter comprises a container having a thin passageway extending between an inlet and an outlet, a source of UV radiation located in close proximity to the exterior surface of the container. Further, the container is annular in configuration having an outer cylindrical and an inner cylindrical wall forming an elongated opening therein, and the outer wall is coated with a reflective coating or wrapped with a reflective material of metal or plastic.

### SUMMARY OF THE INVENTION

Therefore, in order to address the above matters of the related art ultraviolet sterilization filter, the various features described herein have been conceived.

An aspect of the present invention provides an ultraviolet sterilization filter made of a synthetic resin.

Another aspect of the present invention provides an ultraviolet sterilization filter which can be easily fabricated.

Another aspect of the present invention provides an ultraviolet sterilization filter fabricated at a low fabrication cost.

Another aspect of the present invention provides an ultraviolet sterilization filter having improved sterilizing power.

The ultraviolet sterilization filter related to an exemplary embodiment of the present invention to realize at least one of the objects may have the following characteristics.

The present invention is based on the fact that a filter main body of the ultraviolet sterilization filter is made of a synthetic resin and a reflection member for reflecting ultraviolet rays can be easily tightly attached to an inner surface of the filter main body without being processed through welding or the like.

According to an aspect of the present invention, there is provided an ultraviolet sterilization filter including: a filter main body including a sterilization unit into which water flows or from which water flows and a sealing unit connected to the sterilization unit to seal the sterilization unit and made of a synthetic resin; an ultraviolet radiation unit connected to the sealing unit so as to be provided in the sterilization unit and radiating ultraviolet rays to sterilize water introduced into the sterilization unit; and a reflection member inserted into the sterilization unit in a state in which the reflection member is rolled to have an overlap portion in which one end portion thereof overlaps with the other end portion thereof, tightly attached to an inner surface of the sterilization unit, and reflecting ultraviolet rays radiated from the ultraviolet radiation unit.

The reflection member may be provided in the sterilization unit such that the overlap portion is positioned at the opposite side of an area to which water is introduced.

The sterilization unit may include: an inflow part having an inlet through which water is introduced; and a main sterilization part having the reflection member and an outlet through which water flows out, wherein an additional reflection member is tightly attached to an inner surface of the inflow part.

The inflow part may include a protrusion spaced apart from an inner surface of the main sterilization part.

The additional reflection member may include a stopping portion caught by the protrusion.

The inlet or the outlet may include additional reflection members provided thereon, respectively.

The ultraviolet sterilization filter may further include: a quartz tube connected to the sealing unit so as to be provided within the sterilization unit such that the quartz tube surrounds the ultraviolet radiation unit.

The inflow part included in the sterilization part and the additional reflection member provided to the inflow part may include quartz tube insertion portions to which one side of the quartz tube is inserted.

One end portion of each of the additional reflection members formed on the inlet or the outlet may be positioned to penetrate the reflection member provided to be tightly attached to the inner surface of the inflow part included in the sterilization unit or the reflection member provided to be tightly attached to the inner surface of the main sterilization part included in the sterilization unit.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a vertical-sectional view of an ultraviolet sterilization filter according to an exemplary embodiment of the present invention;
FIG. 2 is a cross-sectional view of the ultraviolet sterilization filter taken along line A-A' of FIG. 1 according to an exemplary embodiment of the present invention; and
FIG. 3 is a view illustrating a usage state of the ultraviolet sterilization filter according to an exemplary embodiment of the present invention.

### DETAILED DESCRIPTION OF THE PREFERRED EMBODIMENT

To help understand the features of the present invention, an ultraviolet sterilization filter according to exemplary embodiments of the present invention will now be described in detail.

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions may be exaggerated for clarity, and the same reference numerals will be used throughout to designate the same or like components.

The exemplary embodiments of the present invention are based on the fact that a filter main body of the ultraviolet sterilization filter is made of a synthetic resin and a reflection member for reflecting ultraviolet rays can be easily tightly attached to an inner surface of the filter main body without being processed through welding or the like.

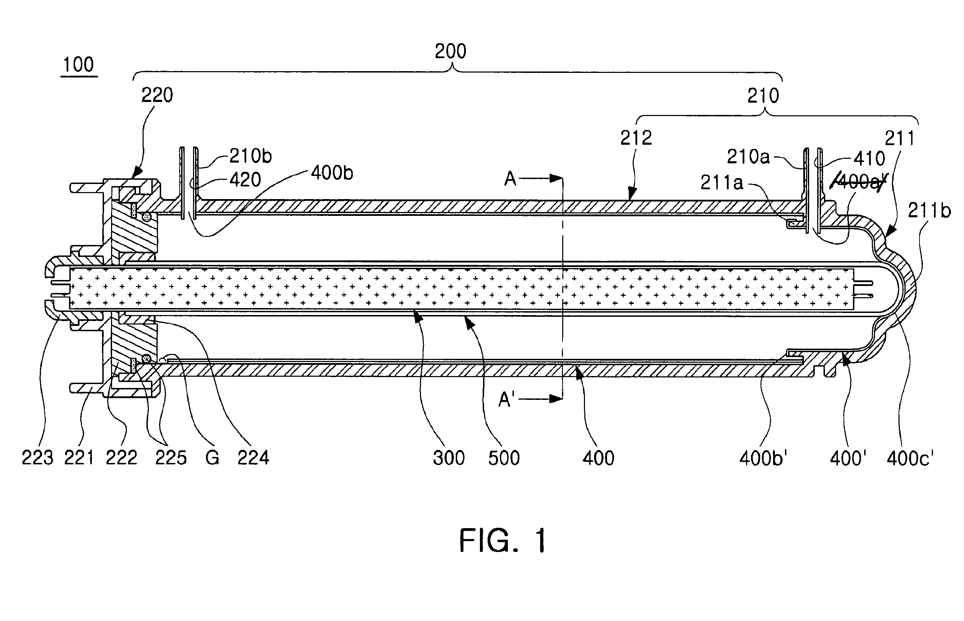

As shown in FIG. 1, an ultraviolet sterilization filter 100 according to an exemplary embodiment of the present invention may include a filter main body 200, an ultraviolet radiation unit 300, and a reflection member 400.

The filter main body 200 may include a sterilization unit 210 and a sealing unit 220. The filter main body 200 may be made of a synthetic resin. Thus, even if the filter main body 200 has a complicated shape, it can be easily fabricated through injection molding of a synthetic resin.

Water may flow into or flow out of the sterilization unit 210. To this end, the sterilization unit 210 may include an inlet 210a and an outlet 210b as illustrated in FIG. 1. Water may be introduced into the sterilization unit 210 through the inlet 210a and, after the water moves within the sterilization unit 210, it may flow out through the outlet 210b.

As shown in FIG. 1, an ultraviolet radiation unit 300 may be connected to the sealing unit 220 in the sterilization unit 210. Ultraviolet rays may be radiated from the ultraviolet radiation unit 300. Accordingly, water, which has been introduced into the sterilization unit 210 through the inlet 210a, may be sterilized, while moving or flowing within the sterilization unit 210, by ultraviolet rays radiated from the ultraviolet radiation unit 300. The ultraviolet radiation unit 300 is not particularly limited, and any of an ultraviolet lamp, an ultraviolet LED, or the like, may be used so long as ultraviolet rays can be radiated therefrom.

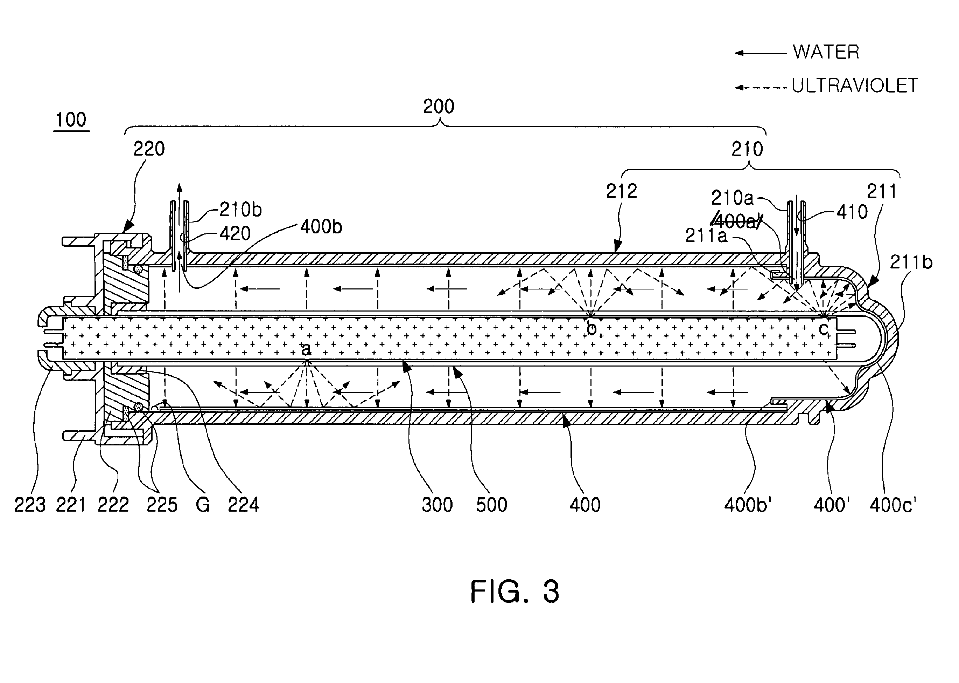

A reflection member 400 may be provided to be tightly attached to an inner surface of the sterilization unit 210 as shown in FIG. 1. Thus, as indicated by a, b, and c in FIG. 3, ultraviolet rays radiated from the ultraviolet radiation unit 300 can be reflected by the reflection member 400, rather than infiltrating into the sterilization unit 210. Thus, because water flowing within the sterilization unit 210 is constantly being sterilized by ultraviolet rays by the reflection member 400, sterilizing power can be improved.

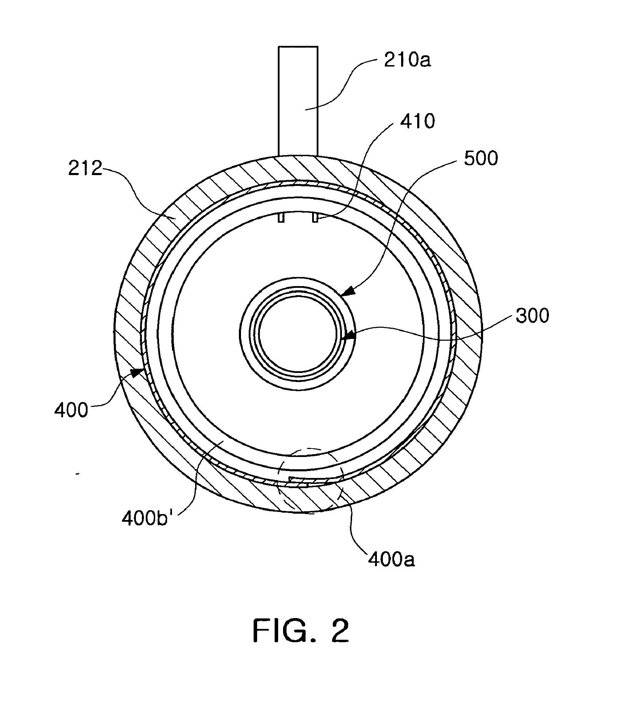

As shown in FIG. 2, the reflection member 400 may be inserted into the sterilization unit 210, in a state in which the reflection member 400 is rolled such that one end portion and the other end portion thereof overlap with each other to form an overlap portion 400a. When the reflection member 400, in a state of forming the overlap portion 400a, is inserted into the sterilization unit 210, the reflection member 400 can be easily tightly attached to an inner surface of the sterilization unit 210 by an elastic force of the reflection member 400. Thus, the reflection member 400 can be easily tightly attached to the inner surface of the sterilization unit 210, without having to connect one end portion and the other end portion of the reflection member 400 through welding or the like. Also, because the elastic force of the reflection member 400 constantly acts on the inner surface of the sterilization unit 210, the sterilization unit 210 made of a synthetic resin can be prevented from being deformed.

Also, as shown in FIG. 2, the reflection member 400 may be provided in the sterilization unit 210 such that the overlap portion 400a is positioned at the opposite side of an area, namely, the inlet 210, to which water is introduced. Thus, because the overlap portion 400a is positioned to be spaced apart from the inlet 210a, the likelihood that water, which has been introduced into the sterilization unit 210 through the inlet 210a, will be leaked into a space between the reflection member 400 and the inner surface of the sterilization unit 210 through the overlap portion 400a can be reduced.

As shown in FIG. 1, a gap (G) may be formed between the reflection member 400 opposed to the inlet 210 and the sealing unit 220. Accordingly, in the state in which the reflection member 400 is provided in the sterilization unit 210 such that the overlap portion 400a of the reflection member 400 is positioned at the opposite side of the area where water is introduced, and even in the case that water is leaked into the space between the reflection member 400 and the inner surface of the sterilization unit 210 through the overlap portion 400a of the reflection member 400, the water can be introduced into the sterilization unit 210 through the gap (G). Thus, water introduced through the inlet 210a can be entirely sterilized by ultraviolet rays and then flow out.

As shown in FIG. 1, the sterilization unit 210 may include an inflow part 211 and a main sterilization part 212.

The inflow part 211 may include the foregoing inlet 210a as shown in FIG. 1. An additional reflection member 400', different from the foregoing reflection member 400, may be provided to be tightly attached to an inner surface of the inflow part 211. The foregoing reflection member 400 may be provided to the main sterilization part 212 as illustrated (to be described). Thus, the reflection member 400' having a complicated shape and provided to the inflow part 211 not occupying a majority of the sterilization unit 210 may be separately fabricated from the reflection member 400 which has a simple shape and is provided to the main sterilization part 212 occupying a majority of the sterilization unit 210. Namely, the reflection member 400 may be fabricated in the form of a plate, and the reflection member 400' may be separately fabricated in such a manner as to correspond to the shape of the inflow part 211 as illustrated.

The reflection member 400, or the reflection member 400', which is separately fabricated, may be provided to be tightly attached to the inner surface of the main sterilization part 212 or the inflow part 211 when the ultraviolet sterilization filter 100 is assembled. Namely, first, the reflection member 400' fabricated to correspond to the shape of the inflow part 211 may be tightly attached to the inner surface of the inflow part 211 in a press-fit manner or the like, and the reflection member 400, in a state of being rolled such that one end portion and the other end portion thereof overlap to form the overlap portion 400a as described above, is inserted into the main sterilization part 212 so as to be tightly attached to the inner surface of the main sterilization part 212. Thus, because the reflection member 400' providing to the inflow part 211 which has a complicated shape and does not occupy a majority of the sterilization unit 210 and the reflection member 400 which has a simple shape and occupies a majority of the sterilization unit 210 are separately fabricated and assembled, the ultraviolet sterilization filter 100 can be easily fabricated.

A protrusion 211a may be formed on the inflow part 211 such that it is separated from the inner surface of the main sterilization part 212. The reflection member 400' provided to be tightly attached to the inner surface of the inflow part 211 may include a stopping portion 400b' to be caught by the protrusion 211a. The presence of the protrusion 211a of the inflow part 211 and the stopping portion 400b' of the reflection member 400' allow the reflection members 400' or 400 to be easily tightly attached to the inner surface of the inflow part 211 or the main sterilization part 212. Also, ultraviolet rays can be prevented from infiltrating into the inflow part 211 or the main sterilization part 212 made of a synthetic resin after passing through the space between the reflection members 400 and 400'. In addition, the likelihood that water, which has been introduced into the sterilization unit 210 through the space between the reflection members 400 and 400', will be leaked into the space between the reflection members 400 and 400' and the inner surface of the inflow part 211 or the main sterilization part 212 can be reduced.

As shown in FIG. 1, the reflection member 400 may be provided in the main sterilization part 212. The outlet 210b may be formed on the main sterilization part 212.

As shown in FIG. 1, an inflow hole 400a' communicating with the inlet 210a of the inflow part 211 may be formed in the reflection member 400' provided to the inflow part 211. Also, an outflow hole 400b communicating with the outlet 210b of the main sterilization part 212 may be formed in the reflection member 400 provided to the main sterilization part 212.

As shown in FIG. 1, the ultraviolet sterilization filter 100 according to an exemplary embodiment of the present invention may further include a quartz tube 500 connected to the sealing unit 220 so as to be provided in the sterilization unit 210 to surround the ultraviolet radiation unit 300. The quartz tube 500 allows ultraviolet rays to be radiated into the sterilization unit 210 and protects the ultraviolet radiation unit 300 against water, or the like, flowing in the sterilization unit 210.

When the quartz tube 500 is included in the ultraviolet sterilization filter 100, quartz tube insertion portions 211b and 400c' may be formed on the inflow part 211 of the sterilization unit 210 and the reflection member 400' provided to the inflow part 211 as shown in FIG. 1. One side of the quartz tube 500 may be inserted into the quartz tube insertion portions 211b and 400c', and accordingly, the quartz tube 500 can be stably fixed in the interior of the sterilization unit 210.

As discussed above, the sealing unit 220 sealing the sterilization unit 210, to which the ultraviolet radiation unit 300 or the quartz tube 500 is connected, may include a blocking member 221 blocking an opened one side of the sterilization unit 210, a support member 222 inserted into the blocking member 221, an electrode member 223 provided to the blocking member 221 and connected to the ultraviolet radiation unit 300, a fixing member 224 provided to the support member 222 and fixing the quartz tube 500, and a sealing member 225 provided to the support member 222. However, the configuration of the sealing unit 220 is not limited thereto. Namely, the sealing unit 220 may have any configuration so long as it seals the sterilization unit 210 and has the ultraviolet radiation unit 300 or the quartz tube 500 connected thereto.

As shown in FIG. 1, additional reflection members 410 and 420 may be provided to the inlet 210a of the inflow part 211 or the outlet 210b of the main sterilization part 212 in a press-fit manner. Thus, when water is introduced from the inlet 210a or discharged out through the outlet 210b, ultraviolet rays can be reflected by the reflection members 410 and 420 to sterilize the water, rather than infiltrating into the inlet 210a or the outlet 210b made of a synthetic resin. Thus, sterilizing power can be improved.

As shown in FIG. 1, one end portion of each of the additional reflection members 410 or 420 may be positioned to penetrate the reflection member 400' provided to be tightly attached to the inner surface of the inflow part 211 or the reflection member 400 provided to be tightly attached to the inner surface of the main sterilization part 212. Accordingly, a gap cannot be generated between the reflection members 410 and 420 provided to the inlet 210a and the outlet 210b and the reflection members 400' and 400. Thus, ultraviolet rays can be reflected by the reflection members 410 and 420, rather than infiltrating into the filter main body 200 including the inlet 210a and the outlet 210b made of a synthetic resin through such a gap, to sterilize water. Thus, the possibility that water is not sterilized by ultraviolet rays cannot happen, and thus, sterilizing power can be improved.

The foregoing reflection members 400, 400', 410, and 420 may be made of stainless steel. However, the material of the reflection members 400, 400', 410, and 420 is not limited thereto, and any material can be used so long as it can easily reflect ultraviolet rays radiated from the ultraviolet radiation unit 300.

The operation of the ultraviolet sterilization filter 100 according to an exemplary embodiment of the present invention will now be described with reference to FIG. 3.

First, an assembly method for the ultraviolet sterilization filter 100 according to an exemplary embodiment of the present invention will now be described. The reflection member 400' corresponding to the shape of the inflow part 211 is assembled in a press-fit manner to the inflow part 211 of the sterilization unit 210 formed by injection-molding a synthetic resin. The reflection member 400, in a state in which one end portion and the other end portion thereof overlap with each other to form the overlap portion 400a, is inserted into the main sterilization part 212 so as to be assembled. Thereafter, the ultraviolet radiation unit 300 and the quartz tube 500 are positioned in the sterilization unit 210, and the sealing unit 220 is connected to the sterilization unit 210, while connecting the ultraviolet radiation unit 300 and the quartz tube 500 to the sealing unit 220.

Thereafter, the inlet 210a is connected to, for example, a water purification filter (not shown) provided to a water purifier (not shown) by a connection pipe (not shown) or the like. Accordingly, water is introduced into the sterilization unit 210 through the inlet 210a as shown in FIG. 3. The water, which has been introduced into the sterilization unit 210, is sterilized by ultraviolet rays radiated by the ultraviolet radiation unit 300 or reflected by the reflection members 400 and 400', while moving therein.

The water sterilized by ultraviolet rays is discharged through the outlet 210b of the sterilization unit 210 and sent to, for example, a water purification tank (not shown), or the like, connected to the outlet 210b by a connection pipe (not shown), so as to be provided to a user.

Meanwhile, Table 1 and Table 2 below show the case in which water was sterilized by using the related art ultraviolet sterilization filter fabricated by inserting a reflection member processed through welding, or the like, to the filter main body made of a synthetic resin, and by using the ultraviolet sterilization filter 100 according to an exemplary embodiment of the present invention.

In order to check the sterilizing power of the related art ultraviolet sterilization filter and that of the ultraviolet sterilization filter 100 according to an exemplary embodiment of the present invention, water including Klebsiella terreigena microbes (or germs) as described in each Table was allowed to pass through the related art ultraviolet sterilization filter and the ultraviolet sterilization filter 100 according to an exemplary embodiment of the present invention so as to be sterilized. The amount of Klebsiella terreigena microbe contained in the sterilized water was subsequently measured. Also, the amount of Klebsiella terreigena microbe contained in the water prior to sterilization and the amount of Klebsiella terreigena microbe contained in the sterilized water were compared and expressed as a percentage to compare sterilizing powers. In addition, such experimentation was performed fifteen times, respectively, as shown in Table 1 and Table 2 below.

As noted in Table 1 and Table 2, the results of the experimentation show that when the water was sterilized with the related art ultraviolet sterilization filter, the Klebsiella terreigena microbe remained therein, although in small levels. In comparison, however, the water which passed through the ultraviolet sterilization filter according to an exemplary embodiment of the present invention did not contain the Klebsiella terreigena microbe, indicating that substantially 100 % of the Klebsiella terreigena microbe was sterilized.

Through this experimentation, it can be noted that the ultraviolet sterilization filter 100, according to an exemplary embodiment of the present invention, has a sterilizing power improved in comparison to that of the related art ultraviolet sterilization filter.

**[Table 1]**

| Number of experiments | Amount before sterilization (CFU/ml) | Amount after sterilization (CFU/ml) | Sterilizing power (%) |
|---|---|---|---|
| 1 | 2.0 x 10⁶ | 3400 | 99.830000 |
| 2 | | 3600 | 99.820000 |
| 3 | | 3200 | 99.840000 |
| 4 | | 3500 | 99.825000 |
| 5 | | 3100 | 99.845000 |
| 6 | | 2400 | 99.880000 |
| 7 | | 2200 | 99.890000 |
| 8 | | 2300 | 99.885000 |
| 9 | | 2100 | 99.895000 |
| 10 | | 2200 | 99.890000 |
| 11 | | 6600 | 99.670000 |
| 12 | | 6400 | 99.680000 |
| 13 | | 6800 | 99.660000 |
| 14 | | 5200 | 99.740000 |
| 15 | | 6600 | 99.670000 |
| Average | | 3973 | 99.801333 |

**[Table 2]**

| Number of experiments | Amount before sterilization (CFU/ml) | Amount after sterilization (CFU/ml) | Sterilizing power (%) |
|---|---|---|---|
| 1 | 5.3 x 10⁶ | 1 | 99.999950 |
| 2 | | 1 | 99.999950 |
| 3 | | 0 | 99.999995 |
| 4 | | 0 | 99.999995 |
| 5 | | 0 | 99.999995 |
| 6 | | 0 | 99.999995 |
| 7 | | 0 | 99.999995 |
| 8 | | 0 | 99.999995 |
| 9 | | 0 | 99.999995 |
| 10 | | 1 | 99.999950 |
| 11 | | 0 | 99.999995 |
| 12 | | 0 | 99.999995 |
| 13 | | 1 | 99.999950 |
| 14 | | 0 | 99.999995 |
| 15 | | 0 | 99.999995 |
| Average | | 0.34 | 99.999983 |

As a result, because the ultraviolet sterilization filter can be made of a synthetic resin, the ultraviolet sterilization filter can be easily fabricated and the fabrication cost of the ultraviolet sterilization filter can be reduced. In addition, the sterilizing power of the ultraviolet sterilization filter can be improved.

As set forth above, according to exemplary embodiments of the invention, the ultraviolet sterilization filter can be made of a synthetic resin.

Also, the ultraviolet sterilization filter can be easily fabricated.

In addition, the ultraviolet sterilization filter can be fabricated at a low fabrication cost.

Moreover, the ultraviolet sterilization filter can have improved sterilizing power.

## Claims

1. An ultraviolet sterilization filter comprising:
a filter main body (200) including a sterilization unit (210) into which water flows or from which water flows and a sealing unit (220) connected to the sterilization unit (210) to seal the sterilization unit (210) and made of a synthetic resin;
an ultraviolet radiation unit (300) connected to the sealing unit (220) so as to be provided in the sterilization unit (210) and radiating ultraviolet rays to sterilize water introduced into the sterilization unit (210); and
a reflection member (400) inserted into the sterilization unit (210) in a state in which the reflection member (400) is rolled to have an overlap portion (400a) in which one end portion thereof overlaps with the other end portion thereof, tightly attached to an inner surface of the sterilization unit (210), and reflecting ultraviolet rays radiated from the ultraviolet radiation unit (300),
wherein the reflection member (400) is provided in the sterilization unit (210) such that the overlap portion (400a) is positioned at the opposite side of an area to which water is introduced.

2. The ultraviolet sterilization filter of claim 1, wherein the sterilization unit (210) comprises:
an inflow part (211) having an inlet (210a) through which water is introduced; and
a main sterilization part (212) having the reflection member (400) and an outlet (210b) through which water flows out,
wherein an additional reflection member (400') is tightly attached to an inner surface of the inflow part (211).

3. The ultraviolet sterilization filter of claim 2, wherein the inflow part (211) comprises a protrusion (211a) spaced apart from an inner surface of the main sterilization part (212).

4. The ultraviolet sterilization filter of claim 3, wherein the additional reflection member (400') comprises a stopping portion (400b') caught by the protrusion (211a).

5. The ultraviolet sterilization filter of claim 2, wherein the inlet (210a) or the outlet (210b) comprises additional reflection members (410 and 420) provided thereon, respectively.

6. The ultraviolet sterilization filter of claim 1, further comprising:
a quartz tube (500) connected to the sealing unit (220) so as to be provided within the sterilization unit (210) such that the quartz tube (500) surrounds the ultraviolet radiation unit (300).

7. The ultraviolet sterilization filter of claim 6, wherein the inflow part (211) included in the sterilization unit (210) and the additional reflection member (400') provided to the inflow part (211) comprises quartz tube insertion portions (211b and 400c') into which one side of the quartz tube (500) is inserted.

8. The ultraviolet sterilization filter of claim 5, wherein one end portion of each of the additional reflection members (410 and 420) formed on the inlet (210a) or the outlet (210b) is positioned to penetrate the reflection member (400') provided to be tightly attached to the inner surface of the inflow part (211) included in the sterilization unit (210) or the reflection member (400) provided to be tightly attached to the inner surface of the main sterilization part (212) included in the sterilization unit (210).

## Patentansprüche

1. Ein Ultraviolett-Sterilisationsfilter aufweisend:
einen Filterhauptkörper (200), der eine Sterilisationseinheit (210) umfasst, in die Wasser fließt oder von der Wasser fließt, und eine Versiegelungseinheit (220) verbunden mit der Sterilisationseinheit (210) zum Versiegeln der Sterilisationseinheit (210) und hergestellt aus einem synthetischen Harz,
eine Ultraviolett-Strahlungseinheit (300), verbunden mit der Versiegelungseinheit (220), um in der Sterilisationseinheit (210) bereitgestellt zu werden, und abgestrahlte Ultraviolett-Strahlen zum Sterilisieren von Wasser, das in die Sterilisationseinheit (210) eingebracht ist, und
ein Reflektionsbauteil (400) eingefügt in die Sterilisationseinheit (210) in einem Zustand, in dem das Reflektionsbauteil (400) gerollt ist, um einen überlappenden Anteil (400a) zu erhalten, in dem ein Endanteil davon mit dem anderen Endanteil davon überlappt, es fest angefügt an eine innere Oberfläche der Sterilisationseinheit (210) ist und es Ultraviolett-Strahlen abgestrahlt von der Ultraviolett-Abstrahleinheit (300) reflektiert,
wobei das Reflektionsbauteil (400) in der Sterilisationseinheit (210) bereitgestellt wird, sodass der überlappende Anteil (400a) an der gegenüberliegenden Seite von einem Gebiet, von dem Wasser eingeführt ist, positioniert ist.

2. Ultraviolett-Sterilisationsfilter nach Anspruch 1, wobei die Sterilisationseinheit (210) aufweist:
einen Einströmungsteil (211) mit einem Zulauf (210a), durch den Wasser eingeführt wird, und
einen Hauptsterilisationsteil (212) mit dem Reflektionsbauteil (400) und einem Austritt (210b), durch den Wasser hinaus fließt,
wobei ein zusätzliches Reflektionsbauteil (400') fest an eine innere Oberfläche des Einströmungsteils (211) angefügt ist.

3. Ultraviolett-Sterilisationsfilter nach Anspruch 2, wobei das Zulaufteil (211) einen Vorsprung (211 a) mit einem Abstand von einer inneren Oberfläche des Hauptsterilisationsteils (212) aufweist.

4. Ultraviolett-Sterilisationsfilter nach Anspruch 3, wobei das zusätzliche Reflektionsbauteil (400') einen Stoppanteil (400b') aufweist, das von dem Vorsprung (211a) erfasst wird.

5. Ultraviolett-Sterilisationsfilter nach Anspruch 2, wobei der Zulauf (210a) oder der Austritt (210b) jeweils zusätzliche Reflektionsbauteile (410 und 420) bereitgestellt darauf aufweisen.

6. Ultraviolett-Sterilisationsfilter nach Anspruch 1, weiter aufweisend:
eine Quartzröhre (500) verbunden mit der Versiegelungseinheit (220), um innerhalb der Sterilisationseinheit (210) bereitgestellt zu werden, sodass die Quartzröhre (500) die ultraviolette Abstrahleinheit (300) umgibt.

7. Ultraviolett-Sterilisationsfilter nach Anspruch 6, wobei das Einströmungsteil (211), das in der Sterilisationseinheit (210) umfasst ist, und das zusätzliche Reflektionsbauteil (400'), das in dem Einströmungsteil (211) bereitgestellt ist, Quartzröhreneinsatzanteile (211b und 400c') aufweisen, in die eine Seite der Quartzröhre (500) eingefügt ist.

8. Ultraviolett-Sterilisationsfilter nach Anspruch 5, wobei ein Endanteil jedes der zusätzlichen Reflektionsbauteile (410 und 420), die auf dem Zulauf (210a) oder dem Austritt (210b) geformt sind, positioniert ist, um das Reflektionsbauteil (400'), das bereitgestellt wird, um fest an die innere Oberfläche des Einströmungsteils (211), das in der Sterilisationseinheit (210) umfasst ist, angefügt zu werden, oder das Reflektionsbauteil (400) zu durchdringen, das bereitgestellt ist, um fest an die inneren Oberfläche des Hauptsterilisationsteils (212), das in der Sterilisationseinheit (210) umfasst ist, angefügt zu werden.

## Revendications

1. Filtre de stérilisation par rayons ultraviolets comprenant :
un corps principal de filtre (200) comprenant une unité de stérilisation (210) dans laquelle de l'eau s'écoule ou à partir de laquelle de l'eau s'écoule et une unité d'étanchéité (220) raccordée à l'unité de stérilisation (210) pour sceller l'unité de stérilisation (210) et constituée d'une résine synthétique ;
une unité de rayonnement ultraviolet (300) raccordée à l'unité d'étanchéité (220) de manière à être disposée dans l'unité de stérilisation (210) et émettant des rayons ultraviolets pour stériliser l'eau introduite dans l'unité de stérilisation (210) ; et
un élément de réflexion (400) inséré dans l'unité de stérilisation (210) dans un état dans lequel l'élément de réflexion (400) est roulé pour avoir une portion de chevauchement (400a) dans laquelle une portion d'extrémité de celui-ci chevauche son autre portion d'extrémité, fixé de manière étanche à une surface intérieure de l'unité de stérilisation (210), et réfléchissant des rayons ultraviolets émis à partir de l'unité de rayonnement ultraviolet (300),
dans lequel l'élément de réflexion (400) est disposé dans l'unité de stérilisation (210) de manière que la portion de chevauchement (400a) soit positionnée au niveau du côté opposé d'une zone à laquelle l'eau est introduite.

2. Filtre de stérilisation par rayons ultraviolets selon la revendication 1, dans lequel l'unité de stérilisation (210) comprend :
une partie d'entrée (211) ayant une entrée (210a) à travers laquelle l'eau est introduite ; et
une partie de stérilisation principale (212) ayant l'élément de réflexion (400) et une sortie (210b) à travers laquelle l'eau s'écoule à l'extérieur,
dans lequel un élément de réflexion additionnel (400') est fixé de manière étanche à une surface intérieure de la partie d'entrée (211).

3. Filtre de stérilisation par rayons ultraviolets selon la revendication 2, dans lequel la partie d'entrée (211) comprend une saillie (211a) espacée d'une surface intérieure de la partie de stérilisation principale (212).

4. Filtre de stérilisation par rayons ultraviolets selon la revendication 3, dans lequel l'élément de réflexion additionnel (400') comprend une portion d'arrêt (400b') capturée par la saillie (211a).

5. Filtre de stérilisation par rayons ultraviolets selon la revendication 2, dans lequel l'entrée (210a) ou la sortie (210b) comprend des éléments de réflexion additionnels (410 et 420) disposés respectivement sur celles-ci.

6. Filtre de stérilisation par rayons ultraviolets selon la revendication 1, comprenant en outre :
un tube de quartz (500) raccordé à l'unité d'étanchéité (220) de manière à être disposé à l'intérieur de l'unité de stérilisation (210) de manière que le tube de quartz (500) entoure l'unité de rayonnement ultraviolet (300).

7. Filtre de stérilisation par rayons ultraviolets selon la revendication 6, dans lequel la partie d'entrée (211) incluse dans l'unité de stérilisation (210) et l'élément de réflexion additionnel (400') disposé sur la partie d'entrée (211) comprend des portions d'insertion de tube de quartz (211b et 400c') dans lesquelles un côté du tube de quartz (500) est inséré.

8. Filtre de stérilisation par rayons ultraviolets selon la revendication 5, dans lequel une portion d'extrémité de chacun des éléments de réflexion additionnels (410 et 420) formés sur l'entrée (210a) ou la sortie (210b) est positionnée pour pénétrer l'élément de réflexion (400') disposé pour être fixé de manière étanche à la surface intérieure de la partie d'entrée (211) incluse dans l'unité de stérilisation (210) ou l'élément de réflexion (400) disposé pour être fixé de manière étanche à la surface intérieure de la partie de stérilisation principale (212) incluse dans l'unité de stérilisation (210).
